# EUROPEAN PATENT SPECIFICATION

(11) **EP 0 240 976 B1**
(45) Date of publication and mention of the grant of the patent: **30.06.1993**
(21) Application number: 87105080.3
(22) Date of filing: 06.04.1987
(51) Int. Cl.: B32B 27/18, B32B 27/30, B32B 27/32, C08K 3/04

(54) **Packaging material**
Verpackungsmaterial
Matériau d'emballage

(30) Priority: 07.04.1986 JP 50918/86
(43) Date of publication of application: 14.10.1987
(73) Proprietor: FUJI PHOTO FILM CO., LTD., Kanagawa 250-01 (JP)
(72) Inventor: Akao, Mutsuo Fuji Photo Film Co., Ltd., Odawara-shi Kanagawa (JP)
(74) Representative: Grünecker, Kinkeldey, Stockmair & Schwanhäusser Anwaltssozietät

(56) References cited:
- EP-A- 0 156 203
- AT-B- 379 987
- GB-A- 2 026 942
- US-A- 4 513 050

## Description

This invention relates to a packaging material suitable for various photographic or other photosensitive materials or other products such as IC, the function of which is damaged by static electricity.

Generally, a plastic film provides an electrical insulation, and static electricity is accumulated thereon by contact, friction or peeling with various materials through its manufacture and use. This accumulated static electricity gives rise to various troubles, such as adhesion of dust, strong electric shocks or electric discharge to cause sparkling or ignition of an inflammable material. The trace of electric discharge (static mark) is a fatal defect for photographic photosensitive materials such as photographic film and photographic printing paper. In the case of IC, the function thereof is also damaged by static electricity.

Accordingly, antistatic properties are strictly required of the packaging materials for these materials or products. Other properties are also required according to their uses. For example, it is necessary for packaging materials for photographic photosensitive materials to have various properties such as light-shielding, gas barrier, moisture proofing, physical strengthes such as breaking strength, tear strength, impact puncture strength, Gelbo test strength and wear resistance, heat sealing properties such as heat seal strength, hot tack properties (hot-seal ability), and seal ability of contraries, bag-making aptitude and slipping character in addition to the antistatic properties. Generally, it is difficult to satisfy these properties by a single film material. Therefore, a composite laminated film of a high-pressure branched low-density polyethylene (LDPE) kneaded with carbon black and flexible sheet(s) such as bleached kraft paper and aluminum foil has been employed. A representative example of the conventional laminated film is composed of a light-shielding LDPE film layer, a light-shielding metal foil layer laminated on it through an adhesive layer, and a flexible sheet layer laminated thereupon through an adhesive layer.

On the other hand, the present inventor has already disclosed a laminated film for photosensitive materials the physical strength of which was raised by combining two uniaxially stretched films (U.S.-A-4 331 725). Another laminated film for photosensitive materials has also been disclosed. This film is composed of a foamed sheet layer and two uniaxially stretched thermoplastic resin film layers having a light-shielding property which are laminated on both faces of the foamed sheet layer directly or through an adhesive layer. The thickness of the foamed sheet layer is in the range of 0.3 to 2.0 mm, and the expansion ratio is 5 to 50 times. Two uniaxially stretched films are located so that their stretched axes cross each other at an angle of more than 30 degrees, and the laminated film is compressed up to 40 to 85% of its theoretical total thickness. The impact puncture strength and Gelbo test strength of the compressed laminated film is large, and curling hardly occurs. This film is suitable for a weight material (U.S.-A-4,565,733).

Though the above laminated films were made in order to improve the foregoing physical properties, due to the use of an aluminum foil in order to secure the antistatic properties and moisture proofing, the physical properties of these conventional films were still not sufficient. During packaging, the films were sometimes torn or a hole was made or the heat sealing of the films was sometimes separated, particularly in the cases of weight products and roll films having sharp edges. In addition, when a large amount of a light-shielding material such as carbon black was added, the physical strength of the film was lowered. Then, the amount was set to about 3%, and the total thickness of the film was more than 70 µm. As a result, the film was stiff, and working efficiency of the packaging process was badly influenced. The costs of the packaging were also expensive. When a laminated film having a 7-layers constitution was used for a photographic color printing paper, due to the use of an aluminum foil in order to secure moisture proofing and antistatic properties, the tear strength, impact puncture strength and Gelbo test strength were not sufficient. When the laminated film disclosed in the specification of US-A-4,331,725 was used, the two necessary layers of the uniaxially stretched film had the effect that the laminated film was thick and the packaging material expensive, though the physical properties such as tear strength were improved. When the laminated film disclosed in US-A-4,565,733 was used, the laminated film was thick and its heat sealing properties were not sufficient to secure light-shielding and moisture proofing. Furthermore, since the bag-making aptitude was also not sufficient, the bags for packaging photosensitive materials were formed by using a heat sealer having a special cooling device, and a hot bar was pressed through a heat-resistant film. As a result thereof, the laminated film of US-A-4,565,733 was expensive. When the metal foil is not employed, the physical strength is raised. But, in contrast, the antistatic properties and moisture proofing are lowered.

US-A-4,513,050 discloses a material for packaging light-sensitive materials which comprises a substrate coated with a middle layer and a surface layer through melt coextrusion. The surface layer is a thermoplastic resin, for example an ethylene-acrylate copolymer containing not more than 93 weight % ethylene, and the middle layer is also a thermoplastic resin, for example, polyethylene. At least one of these layers comprises a light-shielding material containing carbon black. This light-shielding packaging material requires at least three layers and the carbon black content of this material is not more than 5 weight % in each layer so that the antistatic properties of this material are not sufficient.

The object of the invention is to provide a packaging material which is superior in antistatic properties,
which has sufficient moisuture-proofness, light-shielding and physical strength,
which can be manufactured as a thin film and the production of which is easy.

The present invention provides a packaging material which comprises a film comprising a conductive ethylene-ethyl acrylate copolymer resin layer containing carbon black, and a polyolefin resin layer, **characterized in that**
the conductive ethylene-ethyl acrylate copolymer resin layer contains more than 50 weight % of ethylene-ethyl acrylate copolymer resin, the content of ethyl acrylate of which is in the range of 15 to 30 weight %, 7 to 20 weight % of carbon black and 0.01 to 1 weight % of a lubricant,
and said film is simultaneously coextruded.

In the following a brief description of the drawings is given.
FIGURES 1 to 6 are partial sectional views of preferred embodiments of the invention.
FIGURE 7 is a partial sectional view of a comparative packaging material.
FIGURES 8 and 9 are partial sectional views of conventional packaging materials.
FIGURE 10 is a partial sectional view of a photographic photosensitive material packaged in a double-sheet gusset bag.
FIGURES 11 and 12 are partial sectional views of the outer sheet of a double-sheet gusset bag.

The ethylene-ethyl acrylate copolymer (EEA) resin is a thermoplastic resin, which is more flexible, thermostable and lower crystallizable than a polyethylene resin. The carbon black receptivity of the EEA resin is large compared to high-pressure branched low-density polyethylene (LDPE) resins. When the carbon black content is high, such as 7 to 20 weight %, where antistatic properties can be secured, the physical strength and heat sealing properties are not lowered so much and the electrical conductivity is sufficient. The ethyl acrylate content of the EEA resin is in the range of 15 to 30 wt.%. When the ethyl acrylate content is less than 6 wt.%, the carbon black receptivity of the resin is low, and the uniform dispersion thereof becomes difficult. Furthermore, the physical strength is appreciably lowered and the antistatic effect becomes insufficient. The content of the EEA resin in the conductive EEA resin layer is more than 50 wt.%. When its content is less than 50 wt.%, the results are similar to the above case that the ethyl acrylate content is less than 6 wt.%. The EEA resin is well miscible with various polyolefin resins, such as high-density polyethylene (HDPE) resins, LDPE resins, linear low-density polyethylene (L-LDPE) resins and various polypropylene (PP) resins.

The carbon black is added in order to impart light-shielding and antistatic properties, and its content is 7 to 20 wt.%. When the content is less than 7 wt.%, the antistatic properties becomes insufficient. On the other hand, when the carbon black content is beyond 20 wt.%, the characteristics of the antistatic properties become a problem. Besides, the physical strength, moldability and moistureproofness then are also problematical.

Necessary antistatic properties which make the surface resistance lower than 10¹⁰Ω may be endowed by carbon black alone. In this case, it is necessary to use conductive carbon black. Examples of conductive carbon black are acetylene carbon black and Ketjen carbon black which is a modified by-product carbon black.

The antistatic properties may be secured by blending a conductive material in addition to carbon black. Examples of the conductive material are various conductive metal particles, antistatic agents (for example, enumerated in "Taiden Boshi Zai" (Hideo Marumo, published by Saiwa Shobo, Japan)), and metal powders, fibrous conductive fillers or other fillers hardened by using a liquid polymer or an organic solvent-soluble polymer. In this case, the carbon black having a pH of 5 to 9 and a mean particle size of 10 to 120 µm is preferable. Particularly, oil furnace carbon black having a pH of 6 to 8 and a mean particle size of 15 to 30 µm is preferable because of its dispersibility and light-shielding ability. By using the carbon black of such a pH and particle size, a packaging material suitable for photographic photosensitive materials and having the following merits is obtained. That is, the occurrence of fogging is rare, increase or decrease of the photosensitivity scarcely happens, the light-shielding ability is large, and the lumps of carbon black and pinholes such as fish eyes are hardly generated.

As a method of blending carbon black with the EEA resin, for example the powder blending method, paste blending method, wet blending method, compound coloring method or masterbatch method may be employed. Among them, the masterbatch method is preferable in view of the costs and clear processing. Various masterbatch methods are known, and any known method may be employed. Such a masterbatch method includes the method of dispersing carbon black into a polymer organic solvent solution to produce a masterbatch (Japanese Patent KOKOKU No. 40-26196) and the method of dispersing carbon black into polyethylene to produce a masterbatch (Japanese Patent KOKOKU No. 43-10362).

In this method, first, a masterbatch is prepared by blending more than 10 wt.%, usually more than 30 wt.%, of carbon black with a polyolefin, preferably for example LDPE, L-LDPE, ethylene-vinyl acetate copolymer (EVA), EEA or ethylene-methacrylate copolymer (EMA). The ethyl acrylate content of the above EEA resin may be more or less than 6 wt.%. That is, a part of the EEA base resin may be used as the resin for the masterbatch. Then, the EEA base resin is blended with this masterbatch so that the carbon black content becomes 7 to 20 wt.%. As the resin for the masterbatch, a polyolefin resin, the MI of which is higher than the EEA base resin, is preferable because the carbon black particles uniformly disperse.

In view of a uniform dispersion of carbon black, the compound coloring method is the most superior, although it is expensive.

The lubricant is blended in order to improve the insertion of the product to be packaged, and the antiblocking ability, film moldability and antistatic electrification ability at releasing. A suitable content of the lubricant is 0.01 to 1 wt.% which is determined by considering to secure the above properties and the bad influence of excess lubricant. When the content is beyond the suitable range, the surface of the packaging material becomes sticky and dusts adhere on it. When the product is a photographic photosensitive material, excess lubricant has a bad influence upon it, and development troubles occur. With respect to the influence on photosensitive materials and an improvement of the foregoing properties including slipping characteristics, silicone lubricants, fatty acid amide lubricants, fatty acid lubricants and alkylamine lubricants are preferable. The silicone lubricants include dimethylpolysiloxane. The fatty acid amide lubricants have a carbon number of 10 to 50, preferably 15 to 35, and they include alkylene bis fatty acid amides. Examples of such fatty acid amides are oleic acid amide, erucic acid amide and stearic acid amide. The carbon number of the fatty acids is in the same range as the above of the fatty acid amides.

Examples of commercial lubricants suitable for the present invention include;
Silicone lubricants; "SHINETSU SILICONE"® (Shinetsu Chemical Co., Ltd.), "TORAY SILICONE"® (Toray Silicone Co., Ltd.)
Oleic acid amide lubricants; "ARMOSLIP-CP"® (Lion Akzo Co., Ltd.), "NEWTRON"® and "NEWTRON E 18"® (Nippon Fine Chemical Co., Ltd.), "AMIDE-O"® (Nitto Kagaku K.K.), "DIAMID O-200"® and "DIAMID G-200"® (Nippon Kasei Chemical Co., Ltd.)
Erucic acid amide lubricants; "ALFLOW P-10"® (Nippon Oil and Fats Co., Ltd.)
Stearic acid amide lubricants; "ALFLOW S-10"® (Nippon Oil and Fats Co., Ltd.), "NEWTRON 2"® (Nippon Fine Chemical Co., Ltd.), "DIAMID 200"® (Nippon Kasei Chemical Co., Ltd.)
Bis fatty acid amide lubricants; "BISAMIDE"® (Nitto Kagaku K.K.), "DIAMID-200 BIS"® (Nippon Kasei Chemical Co., Ltd.), "ARMOWAX-EBS"® (Lion Akzo Co., Ltd.)
Alkylamine lubricants; "ELECTROSTRIPPER TS-2"® (Kao Corp.)
The conductive EEA resin layer may contain further components. For example, less than 40 wt.% of other polyolefin resin(s) may additionally be blended to the EEA resin. Such a polyolefin resin includes HDPE resin, LDPE resin, L-LDPE resin, and various PP resins.

The conductive EEA resin layer is endowed with electrical conductivity mainly by blending carbon black or other conductive materials in a high content. However, the EEA resin itself is also conductive, and some lubricants contribute to the conductivity; the conductivity of this layer is such that the surface resistance becomes less than 10¹⁰Ω.

The thickness of the conductive EEA layer is usually 10-160 µm, particularly 15-100 µm.

Polyolefin resins usable for the polyolefin resin layer include LDPE resin, medium-density polyethylene (MDPE) resin, HDPE resin, L-LDPE resin, ethylene-propylene copolymer resin (random type or block type), ethylene-(butene-1) copolymer resin, propylene-(butene-1) copolymer resin, poly(butene-1) resin, polystyrene resin, poly(methyl methacrylate) resin, styrene-acrylonitrile copolymer resin, ABS resin, PP resin, crystalline propylene-α-olefin copolymer resin, modified polypropylene resin, modified polyethylene resin, polypropylene-maleic anhydride graft copolymer resin, chlorinated polyolefin resin such as chlorinated polyethylene resin, chlorinated HDPE resin, chlorinated LDPE resin, chlorinated polyethylene copolymer resin and chlorinated atactic PP resin, EVA resin, ethylene ionomer resin (copolymer of ethylene and unsaturated acid is crosslinked by metal ion), poly(4-methylpentene-1) resin, ethylene-acrylic acid copolymer (EAA) resin, EMA resin, vinyl chloride-propylene resin, ethylene-vinyl alcohol copolymer resin, crosslinked polyethylene resin (e.g. electron rays irradiation crosslinking and chemical crosslinking), polyisobutylene resin, ethylene-vinyl chloride copolymer resin and poly(1,2-butadiene) resin.

Among the above enumerated polyolefin resins, the L-LDPE resin is the most preferable. The L-LDPE is a copolymer of ethylene and α-olefin, and it has a linear structure having short branches. The carbon number of the α-olefin is 3-13, preferably 4-10, and examples are butene-1, 4-methylpentene-1, hexene-1, heptene-1 and octene-1. Preferable α-olefins are 4-methylpentene-1, hexene-1 and octene-1. A suitable ethylene content of L-LDPE is 86-99.5 mol.%, i.e. the α-olefin content is 0.5-14 mol.%, and a preferable ethylene content is 90-99.5 mol.%, i.e. the α-olefin content is 0.5-10 mol.%. The suitable density is in the range of 0.87-0.94 g/cm³. The melt index (M.I., at 190°C) is preferably 0.4-30 g/10 min (ASTM D-1238). Such a L-LDPE resin is manufactured by the vapor phase or liquid phase low- or medium-pressure method or a modified high-pressure method. Examples of L-LDPE resins are "UNIPOLE" and "TUFLIN" (trade names, UCC), "DOWLEX" (trade name, Dow Chemical Co., Ltd.), "STAMILEX" (trade name, DSM), "SUCLEAR" (trade name, DuPont de Nemour, Canada), "MARLEX" (trade name, Phillips Co., Ltd.), "ULTZEX" and "NEOZEX" (trade names, Mitsui Petroleum Chemical Industries Co., Ltd.), "NISSEKI LINIREX" (trade name, Nippon Petrochemicals Co., Ltd.), "IDEMITSU POLYETHYLENE-L"® (Idemitsu Petrochemical Co., Ltd.) and "NUC POLYETHYLENE-LL" (trade name , Nippon Unicar Co., Ltd.).

The L-LDPE resin may be used alone or mixed with thermoplastic resin(s). However, even in the latter case, the content of L-LDPE is preferably more than 50 wt.% in order to secure its superior properties such as physical strength, including tear strength, impact puncture strength and heat sealing properties such as heat seal strength, hot tack properties and seal ability of contraries. As the thermoplastic resin mixed with the L-LDPE resin, a polyolefin resin, particularly a LDPE resin, an EVA resin and an EEA resin are preferable in view of the improvement of the inflation film moldability and the little lowering of physical strength.

In order to secure light-shielding, a light-shielding material is preferably added to the polyolefin resin. This light-shielding material may be a light-reflective material or a light-absorptive material.

The light-reflective material is preferably conductive, and includes metal powders, metal flake and metal fibers. White pigments are also usable. The metal flakes and the metal fibers include aluminum flakes and aluminum fibers. Examples of the white pigments are titanium oxide and barium sulfate. Preferable metal powders are aluminum powder or the aluminum from which low volatile components are removed. The aluminum powder is manufactured by atomization, powdering, dropping on a rotary disc or evaporation from melted aluminum. Since aluminum powder is unstable, it is stabilized by a known treatment. The production of the metal powder for blending with plastics is disclosed, for example, in Japanese Patent KOKAI No. 59-75931. An aluminum powder containing paste is most preferable. The paste of aluminum powder is produced by adding mineral spilit and a small amount of a higher fatty acid such as stearic acid or oleic acid to form a paste during the production of the aluminum powder according to a known method such as using a ball mill, a stamp mill or an atomizer. A polyolefin thermoplastic resin such as at least one of various polypropylene resins or various polyethylene resins, EVA resin, EEA resin or EAA resin is kneaded together with this aluminum paste under heating, and volatile components, mainly mineral spilit, are removed by a vacuum pump. This product is used as aluminum paste compound resin or aluminum paste masterbatch resin. The aluminum paste masterbatch resin is preferable because it eliminates bad smell and bad influence upon the photographic photosensitive materials by minimizing the content of mineral spilit in the coextruded film to, for example, less than 0.1% by weight.

Instead of the light-reflective material, a light-absorptive material such as carbon black or other light-absorptive pigments or dyes may be blended. If such a light-shielding material is not blended, the polyolefin layer may be transparent. However, blending of a light-reflective material is preferable in view of heat shielding in the sunshine and the appearances of the material.

The thickness of the polyolefin resin layer is usually 10-160 µm, particularly 15-100 µm.

The coextruded film may contain one or more layers in addition to the conductive EEA resin layer and the polyolefin resin layer.

Coextrusion may be carried out according to a known method such as T die extrusion or inflation process. The thickness of the coextruded film is determined so as to secure light-shielding, moistureproofness and physical strength, and it is usually 30 to 200 µm. If it is thinner than 30 µm, it becomes difficult to secure for example the moistureproofness, waterproofness, physical strength and dropping strength. If it is thicker than 200 µm, troubles happen in molding, which are, for example, generation of rough texture and increase in load of the motor of extruder. The film also becomes expensive.

The packaging material of the invention may be composed of the coextruded film alone, or other flexible sheet(s) may be laminated thereon. When another flexible sheet is laminated, the thickness of the coextruded can be made 10% or more thinner than in the case of the coextruded film alone. The flexible sheet capable of laminating on the coextruded film includes various unstretched, uniaxially stretched or biaxially stretched thermoplastic resin films such as various polyethylene films, ethylene copolymer films, polypropylene films, polyvinyl chloride films, polyvinylidene chloride films, polyamide films, polycarbonate films, polyester films and their modified resin films. Various flexible sheets such as metallized films including aluminum-metallized films, aluminum-metallized paper, cellulose acetate films, cellophane, polyvinyl alcohol films, various papers, metal foils such as aluminum foil, non-woven fabrics, cross laminated airly fabrics, porous films, foamed polyethylene sheets, foamed polypropylene sheets, foamed polystyrene sheets and foamed polyurethane sheets are also suitable.

When the packaging material is a composite film, the conductive EEA resin layer of the coextruded film is preferably located as the inner face layer to touch a product to be packaged.

Flexible sheet layers may be laminated according to any known method, however, dry laminating and extrusion laminating are particularly favorable. The adhesive suitable for the extrusion laminating includes various polyolefin resins such as polyethylene resin, polypropylene resin, polybutylene resin and ethylene copolymer resins including EVA resin, EMA resin, EEA resin and L-LDPE resin, and ionomer resins (e.g. "SURLYN"® DuPont and "HIMIRAN"® Mitsui Polychemical Co., Ltd.). The melting point of the adhesive employed is preferably more than 5°C lower than the melting point of the flexible sheet in order to laminate without bad influence upon the flexible sheet by a thermal melting adhesion.

The thickness of the adhesive layer formed by extrusion laminating using a thermoplastic resin is usually 6 to 50 µm, preferably 10 to 20 µm. However, the thickness is determined for example based upon the costs, the rate of application and the thickness of the whole layers, and accordingly, the thickness is not limited to the above range.

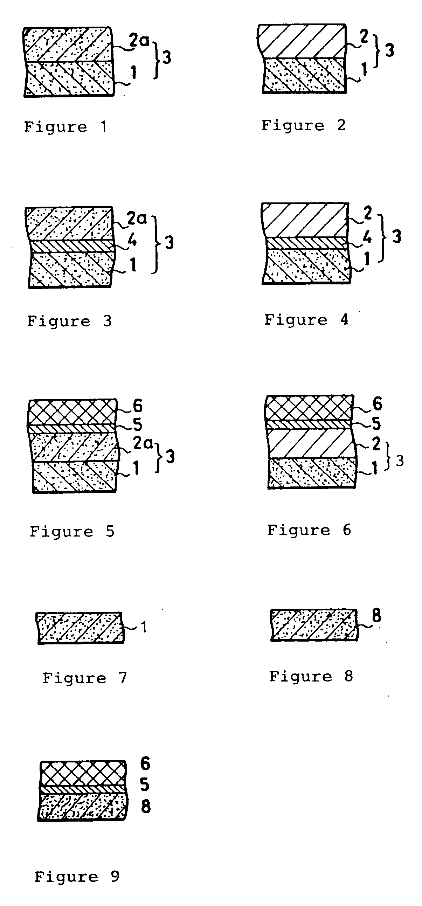

Representative embodiments of the packaging material of the invention are illustrated in FIGURES 1 to 6.

The packaging material of FIGURE 1 is the most fundamental packaging material of the invention which is a simultaneously coextruded double layer film 3 consisting of a conductive EEA resin layer 1 containing more than 50 wt.% of an EEA resin, 7 to 20 wt.% of carbon black and 0.01 to 1 wt.% of a lubricant and a light-shielding polyolefin resin layer 2a containing a light-shielding material.

The packaging material of FIGURE 2 is also a simultaneously coextruded double layer film 3 consisting of a conductive EEA resin layer 1 and a polyolefin resin layer 2 not containing a light-shielding material.

The packaging material of FIGURE 3 is a simultaneously coextruded triple layer film 3 consisting of a conductive EEA resin layer 1, a light-shielding polyolefin resin layer 2a and an intermediate layer provided between them.

The packaging material of FIGURE 4 is a simultaneously coextruded triple layer film 3 consisting of a conductive EEA resin layer 1, a polyolefin resin layer 2 not containing a light-shielding material and an intermediate layer provided between them.

The packaging material of FIGURE 5 is a composite film consisting of the simultaneously coextruded double layer film 3 of FIGURE 1 and a flexible sheet layer 6 laminated thereon through an adhesive layer 5.

The packaging material of FIGURE 6 is a composite film consisting of the simultaneously coextruded double layer film 3 of FIGURE 2 and a flexible sheet layer 6 laminated thereon through an adhesive layer 5.

The packaging material of FIGURE 7 is a comparative packaging material consisting of a conductive EEA resin single layer 1 film.

The packaging material of FIGURE 8 is a most fundamental conventional packaging material consisting of a light-shielding LDPE resin single layer 8 film.

The packaging material of FIGURE 9 is a conventional packaging material consisting of a light-shielding LDPE resin layer 8 of FIGURE 8 and a flexible sheet layer 6 laminated thereon through an adhesive layer 5.

The packaging material of the invention is suitable for not only the products requiring moistureproofness, light-shielding and antistatic properties such as photographic photosensitive materials, other photosensitive materials and thermosensitive recording materials but also the products particularly requiring moisture-proofness and antistatic properties such as IC. The photographic photosensitive materials are for example silver halide photographic photosensitive materials, diazo photographic photosensitive materials, photosensitive resins, self-developing type photographic materials and diffusion-transfer type photographic materials. The other photosensitive materials include any material which can be discolored, or denatured by light. Examples of these photosensitive materials are foods and drinks such as chocolate, margarine, Miso, wine and beer, medicines, dyes and other chemical materials such as developing solutions and mordants for dyeing. However, the packaging material of the invention is particularly suitable for photographic photosensitive materials.

The package form may be conventional, and includes a single-sheet flat bag, a double-sheet flat bag, a square bottom bag, a self-standing bag, a single-sheet gusset bag, a double-sheet gusset bag, a film sheet, an inner lining for a moisture proof box and a leader paper. The sealing form may also be usual, and includes heat sealing, impulse heat sealing, supersonic welding and high frequency sealing. The methods of using an adhesive and a pressure sensitive adhesive may also be utilized.

The packaging material of the invention is superior in antistatic properties, moisture-proofness, light-shielding, tear strength, impact puncture strength, slipping character and heat sealing properties. The production of the packaging material of the invention is easy because of its superior moldability, and because the generation of blocking, fish eyes and pin holes is rare. The packaging material of the invention can be made thinner than the conventional packaging material, and expensive metal foil is not necessary. Accordingly, this packaging material is inexpensive.

### EXAMPLES

### Example 1

The packaging material of Example 1 corresponds to the embodiment illustrated in FIGURE 1. The conductive EEA resin layer is 50 µm thick, and consists of an EEA resin containing 15 wt.% of Ketjen carbon black and 0.05 wt.% of an erucic acid amide lubricant. The ethyl acrylate (EA) content of the EEA resin is 18 wt.%, its MI is 6 g/10 min and its density is 0.93 g/cm³. The polyolefin resin layer is also 50 µm thick, and is formed from 98 wt.% of a polyolefin resin consisting of 95.5 parts by weight of the L-LDPE resin A which is a copolymer of ethylene and 4-methylpentene-1 and 4.5 parts by weight of a LDPE resin and 2 wt.% of aluminum powder. This resin for the extrusion of the polyolefin resin layer was produced by first making an aluminum paste masterbatch of the LDPE resin so that the final content of low volatile components in the polyolefin resin layer became lower than 0.05 wt.%, and then blending this masterbatch with the L-LDPE resin. The coextrusion was carried out by the inflation process.

### Example 2

The packaging material of Example 2 is the same as Example 1 except that the conductive EEA resin layer further contains 30 wt.% of L-LDPE resin "ULTZEX 2020L".

### Comparative Example

The comparative packaging material is a light-shielding single layer film consisting of the conductive EEA resin layer having the same composition as Example 1. The film is 100 µm thick. It was also produced by the inflation process.

### Reference Example

A conventional packaging material corresponds to FIGURE 8. It is a light-shielding single layer film consisting of a light-shielding LDPE resin layer containing 3 weight % of oil furnace carbon black.

In this packaging material, the LDPE resin has an MI of 2,4 g/10 min and a density of 0,923 g/cm³, and the carbon black is an "oil furnace carbon black" having a mean particle size of 21 µm and a pH of 7,7.

The constitutions of the packaging materials of Examples 1 and 2, the Comparative Example and the Reference Example are tabulated in Table 1, and their properties are tabulated in Table 2.

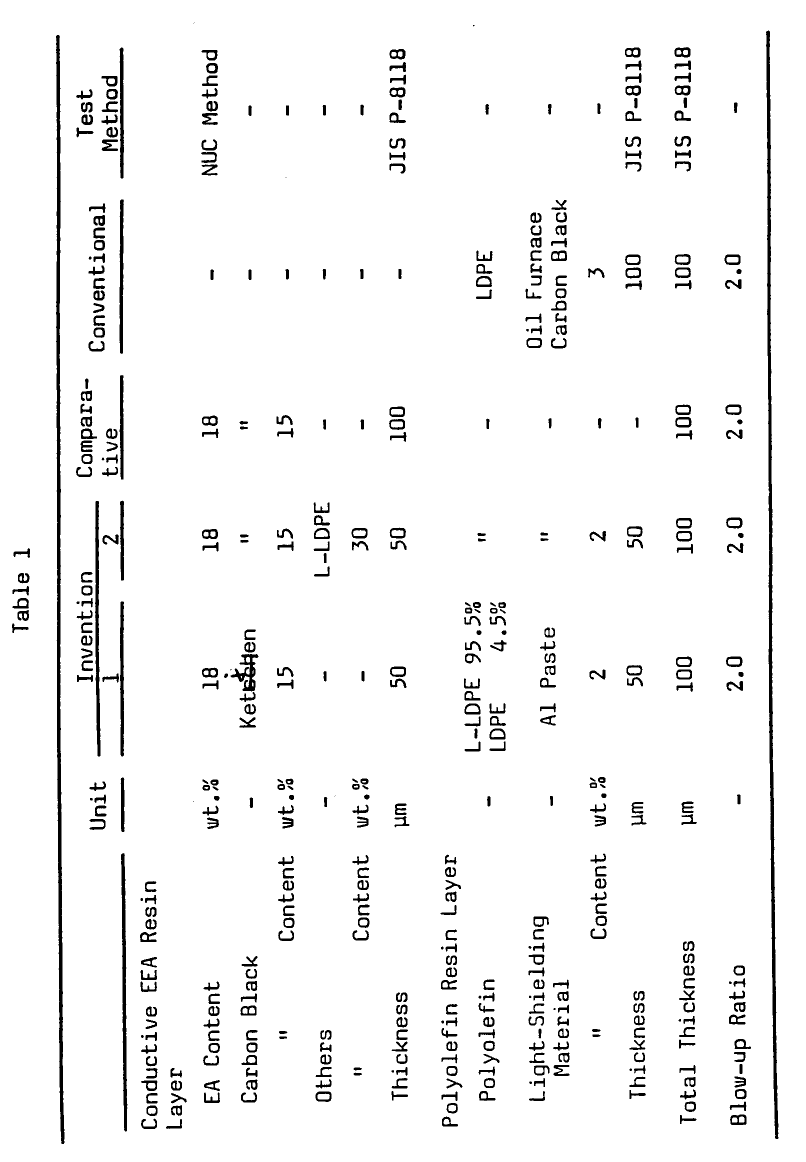

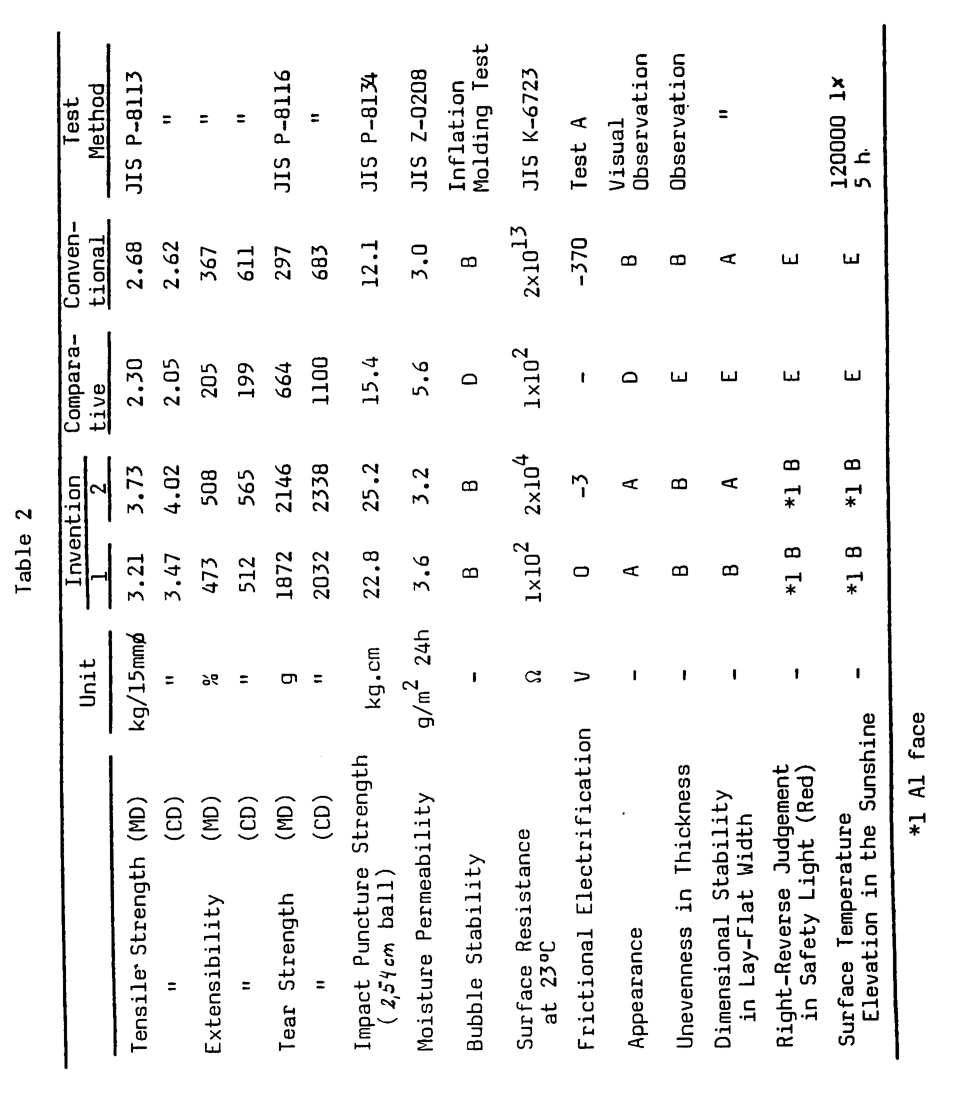

The evaluations in Table 2 were carried out as follows;

| | |
|---|---|
| A very excellent | B excellent |
| C practical | D problematic |
| E impractical | |

### Test A

An endless belt of each exemplified film having a width of 35 mm and a length of 1350 mm was prepared and then run between two SUS rollers loaded with 500 g at a speed of 12 m/min. The frictional electrification was measured by a voltmeter.

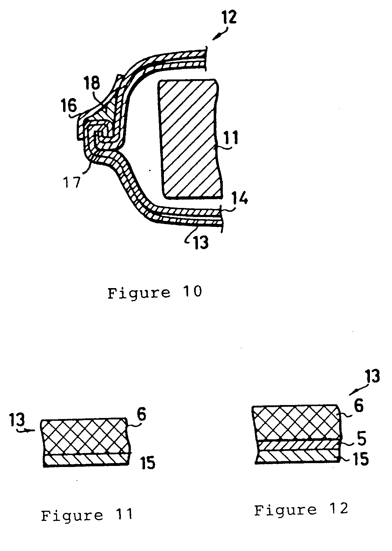

A double-sheet gusset bag for color photographic printing paper was made by using the packaging material of the invention. The bag is illustrated in FIGURES 10 to 12.

FIGURE 10 is a partially sectional side view illustrating the state that a roll of color photographic printing paper 11 was packaged in the gusset bag. This bag 12 consisted of an outer sheet 13 and an inner sheet 14. Examples of the outer sheet 13 are shown in FIGURES 11 and 12. The outer sheet 13 of FIGURE 11 consisted of a flexible sheet layer 6 and a heat sealing layer 15 laminated thereon. The outer sheet of FIGURE 12 consisted of a flexible sheet layer 6 and a heat sealing layer 15 laminated thereon through an adhesive layer 5. The packaging material of the invention such as exemplified in FIGURES 1 or 2 was used as the inner sheet 14. The inner sheet 14 and the outer sheet 13 were sealed at a center sealing of its longitudinal direction (not shown in the drawing) and an edge sealing position 17 by heat sealing. The edge was tacked and joined by an adhesive 18. A tape 16 was further stuck on to form a sealing.

## Claims

1. A packaging material which comprises a film comprising a conductive ethylene-ethyl acrylate copolymer resin layer containing carbon black, and a polyolefin resin layer, **characterized in that**
the conductive ethylene-ethyl acrylate copolymer resin layer contains more than 50 wt. % of ethylene-ethyl acrylate copolymer resin, the content of ethyl acrylate of which is in the range of 15 to 30 wt. %, 7 to 20 wt. % of carbon black and 0.01 to 1 wt. % of a lubricant,
and said film is simultaneously coextruded.

2. The packaging material of claim 1, wherein the surface resistance of said conductive ethylene-ethyl acrylate copolymer resin layer is less than 10¹⁰Ω.

3. The packaging material of claim 1, wherein said carbon black is acetylene carbon black or Ketjen carbon black.

4. The packaging material of claim 1, wherein a further conductive material is blended into said conductive ethylene-ethyl acrylate copolymer resin layer.

5. The packaging material of claim 4, wherein said conductive material is selected from the group consisting of conductive metal particles, antistatic agents and a metal powder, a fibrous conductive filler or another filler hardened by using a liquid polymer or an organic solvent-soluble polymer.

6. The packaging material of claim 1, wherein said lubricant is selected from the group consisting of silicone lubricants, oleic acid amide lubricants, erucic acid amide lubricants, stearic acid amide lubricants, bis fatty acid amide lubricants and alkylamine lubricants.

7. The packaging material of claim 1, wherein said polyolefine resin is a polyethylene resin or a copoylmer of ethylene and α-olefin.

8. The packaging material of claim 1, wherein said polyolefin resin is a L-LDPE resin.

9. The packaging material of claim 1, wherein said polyolefin resin is a mixture of a L-LDPE resin with a LDPE resin, an EVA resin or an EEA resin.

10. The packaging material of claim 1, wherein said polyolefin resin layer further contains a light-shielding material.

11. The packaging material of claim 10, wherein said light-shielding material is a light-reflective material.

12. The packaging material of claim 11, wherein said light-reflective material is aluminum powder.

13. The packaging material of claim 1, furthermore comprising a flexible sheet laminated on the side of said polyolefin resin layer.

14. The use of the packaging material of any of the preceding claims for photographic photosensitive materials.

15. A process for preparing a packaging material of claims 1 to 13, **characterized in that**
a conductive ethylene-ethyl acrylate copolymer resin composition containing more than 50 wt. % of ethylene-ethyl acrylate resin, the content of ethyl acrylate of which is in the range of 15 to 30 wt. %, 7 to 20 wt. % of carbon black and 0.01 to 1 wt. % of a lubricant, and
a polyolefin resin
are simultaneously coextruded.

16. The process of claim 15, wherein the coextrusion process is an inflation process.

## Patentansprüche

1. Verpackungsmaterial, umfassend einen Film, der eine leitfähige Ethylen/Ethylacrylat-Copolymerharzschicht, die Ruß enthält, und eine Polyolefin-Harzschicht umfaßt, **dadurch gekennzeichnet,** daß die leitfähige Ethylen/Ethylacryl-Copolymerharzschicht mehr als 50 Gew.% eines Ethylen/Ethylacrylat-Copolymerharzes mit einem Ethylacrylatgehalt in dem Bereich von 15 bis 30 Gew.%, 7 bis 20 Gew.% Ruß und 0,01 bis 1 Gew.% eines Schmierstoffes enthält, und der Film gleichzeitig koextrudiert wird.

2. Verpackungsmaterial nach Anspruch 1, worin der Oberflächenwiderstand der leitfähigen Ethylen/Ethylacrylat-Copolymerharzschicht weniger als 10¹⁰Ω beträgt.

3. Verpackungsmaterial nach Anspruch 1, worin der Ruß Acetylen-Ruß oder Ketjen-Ruß ist.

4. Verpackungsmaterial nach Anspruch 1, worin ein weiteres leitfähiges Material in die leitfähige Ethylen/Ethylacrylat-Copolymerharzschicht eingemischt ist.

5. Verpackungsmaterial nach Anspruch 4, worin das leitfähige Material ausgewählt ist aus der Gruppe, bestehend aus leitfähigen Metallteilchen, antistatischen Mitteln und einem Metallpulver, einem faserförmigen leitfähigen Füllstoff oder einem anderen Füllstoff, gehärtet unter Verwendung eines flüssigen Polymers oder eines in einem organischen Lösungsmittel löslichen Polymers.

6. Verpackungsmaterial nach Anspruch 1, worin das Schmiermittel ausgewählt ist aus der Gruppe, bestehend aus Silikonschmierstoffen, Ölsäureamidschmierstoffen, Erucasäureamidschmierstoffen, Stearinsäureamidschmierstoffen, Bisfettsäureamidschmierstoffen und Alkylaminschmierstoffen.

7. Verpackungsmaterial nach Anspruch 1, worin das Polyolefinharz ein Polyethylenharz oder ein Copolymer aus Ethylen und α-Olefin ist.

8. Verpackungsmaterial nach Anspruch 1, worin das Polyolefinharz ein L-LDPE-Harz ist.

9. Verpackungsmaterial nach Anspruch 1, worin das Polyolefinharz ein Gemisch eines L-LDPE-Harzes mit einem LDPE-Harz, einem EVA-Harz oder einem EEA-Harz ist.

10. Verpackungsmaterial nach Anspruch 1, worin die Polyolefinharzschicht weiterhin ein lichtabschirmendes Material enthält.

11. Verpackungsmaterial nach Anspruch 10, worin das lichtabschirmende Material ein lichtreflektierendes Material ist.

12. Verpackungsmaterial nach Anspruch 11, worin das lichtreflektierende Material Aluminiumpulver ist.

13. Verpackungsmaterial nach Anspruch 1, das weiterhin eine flexible dünne Schicht umfaßt, die auf die Seite der Polyolefinharzschicht aufgetragen ist.

14. Verwendung eines Verpackungsmaterials nach irgendeinem der vorhergehenden Ansprüche für fotografische lichtempfindliche Materialien.

15. Verfahren zur Herstellung eines Verpackungsmaterials nach Anspruch 1 bis 13, **dadurch gekennzeichnet,** daß eine leitfähige Ethylen/Ethylacrylat-Copolymerharzzusammensetzung, die mehr als 50 Gew.% Ethylen/Ethylacrylatharz mit einem Ethylacrylatgehalt in dem Bereich von 15 bis 30 Gew.%, 7 bis 20 Gew.% Ruß und 0,01 bis 1 Gew.% eines Schmierstoffes enthält, und ein Polyolefinharz gleichzeitig koextrudiert werden.

16. Verfahren nach Anspruch 15, worin das Koextrusionsverfahren ein Aufblähverfahren ist.

## Revendications

1. Matériau d'emballage qui comprend un film constitué d'une couche de résine conductrice d'un copolymère éthylène-acrylate d'éthyle contenant du noir de carbone, et d'une couche de résine de polyoléfine, caractérisé en ce que:
la couche de résine conductrice de copolymère éthylène-acrylate d'éthyle contient plus de 50% en poids de résine de copolymère éthylène-acrylate d'éthyle, dont la teneur en acrylate d'éthyle est dans l'intervalle de 15 à 30% en poids, 7 à 20% en poids de noir de carbone et 0,01 à 1% en poids d'un lubrifiant,
et ledit film est coextrudé simultanément.

2. Matériau d'emballage selon la revendication 1, dans lequel la résistance superficielle de ladite couche de résine conductrice de copolymère éthylène-acrylate d'éthyle est inférieure à 10¹⁰ Ω.

3. Matériau d'emballage selon la revendication 1, dans lequel ledit noir de carbone est du noir de carbone d'acétylène ou du noir de carbone Ketjen.

4. Matériau d'emballage selon la revendication 1, dans lequel un autre matériau conducteur est mélangé à ladite couche de résine conductrice de copolymère éthylène-acrylate d'éthyle.

5. Matériau d'emballage selon la revendication 4, dans lequel ledit matériau conducteur est sélectionné dans le groupe constitué par des particules métalliques conductrices, des agents antistatiques et une poudre métallique, une charge conductrice fibreuse ou une autre charge durcie par utilisation d'un polymère liquide ou d'un polymère soluble dans un solvant organique.

6. Matériau d'emballage selon la revendication 1, dans lequel ledit lubrifiant est sélectionné dans le groupe constitué de lubrifiants à base de silicone, de lubrifiants à base d'amide d'acide oléique, de lubrifiants à base d'amide d'acide érucique, de lubrifiants à base d'amide d'acide stéarique, de lubrifiants à base de bis-acide gras et de lubrifiants à base d'alkylamine.

7. Matériau d'emballage selon la revendication 1, dans lequel ladite résine de polyoléfine est une résine de polyéthylène ou un copolymère d'éthylène et d'α-oléfine.

8. Matériau selon la revendication 1, dans lequel ladite résine de polyoléfine est une résine de polyéthylène basse densité linéaire.

9. Matériau d'emballage selon la revendication 1, dans lequel ladite résine de polyoléfine est un mélange d'une résine de polyéthylène basse densité linéaire avec une résine de polyéthylène basse densité, une résine d'éthylène-acétate de vinyle, ou une résine d'éthylène-acrylate d'éthyle.

10. Matériau d'emballage selon la revendication 1, dans lequel ladite couche de résine de polyoléfine contient en outre un matériau de protection contre la lumière.

11. Matériau d'emballage selon la revendication 10, dans lequel ledit matériau de protection contre la lumière est un matériau réfléchissant la lumière.

12. Matériau d'emballage selon la revendication 11, dans lequel ledit matériau réfléchissant la lumière est une poudre d'aluminium.

13. Matériau d'emballage selon la revendication 1, comprenant en outre une feuille souple stratifiée sur une face de ladite couche de résine de polyoléfine.

14. Utilisation du matériau d'emballage selon l'une quelconque des revendications précédentes pour des matériaux photosensibles photographiques.

15. Procédé pour préparer un matériau d'emballage selon les revendications 1 à 13, caractérisé en ce que
une composition de résine conductrice d'un copolymère d'éthylène-acrylate d'éthyle contenant plus de 50% en poids d'une résine d'éthylène-acrylate d'éthyle dont la teneur en acrylate d'éthyle est dans l'intervalle de 15 à 30% en poids, 7 à 20% en poids de noir de carbone et 0,01 à 1% en poids d'un lubrifiant, et
une résine de polyoléfine sont simultanément coextrudées.

16. Procédé selon la revendication 15, dans lequel le procédé de coextrusion est un procédé de gonflage.
